# EUROPEAN PATENT SPECIFICATION

(11) **EP 4 175 853 B1**
(45) Date of publication and mention of the grant of the patent: **26.03.2025**
(21) Application number: 21736762.2
(22) Date of filing: 01.07.2021
(51) Int. Cl.: B60R 3/00, B60J 5/04, B62D 35/00

(54) **A VEHICLE**
FAHRZEUG
VÉHICULE

(30) Priority: 02.07.2020 NL 2025976
(43) Date of publication of application: 10.05.2023
(73) Proprietor: DAF Trucks N.V., 5643 TW Eindhoven (NL)
(72) Inventor: VAN DEN HEIJKANT, Rob Adrianus Johannes, 5643 TW Eindhoven (NL); VAN KEMPEN, Paul Walter, 5643 TW Eindhoven (NL); RENTEMA, Date Willem Egbert, 5643 TW Eindhoven (NL); VAN DIJK, Niek Jan Gerard, 5643 TW Eindhoven (NL)
(74) Representative: V.O.
(86) International application number: PCT/NL2021/050414
(87) International publication number: WO 2022/005285

(56) References cited:
- EP-B1- 2 964 488
- KR-A- 20170 135 436

## Description

The invention relates to a vehicle, in particular a heavy goods vehicle, having a chassis, a cabin supported by the chassis, the cabin comprising a cabin front surface facing forwards in the vehicle's normal direction of movement, a cabin front corner section on a side of the cabin front surface, and a cabin side section which extends from the cabin front corner section rearwards in the vehicle's normal direction of movement, the chassis comprising a chassis front surface facing forwards in the vehicle's normal direction of movement, a chassis front corner section on a side of the chassis front surface, a chassis side section which extends from the chassis front corner section rearwards in the vehicle's normal direction of movement and a chassis corner transition region between the chassis front surface and the chassis side section, the cabin side section being provided with a door and a door opening, the door being hingeably mounted to the cabin around a door hinge for blocking access or allowing access to the door opening, the door opening having a lower door opening edge, the vehicle comprising a number of steps leading to the door opening, each of the steps being supported by the cabin or the chassis, wherein an upper step of the number of steps is positioned at a distance below the lower door opening edge, wherein the steps are placed within one or more recesses in the cabin or the chassis and wherein the door comprises a lower door extension extending downwardly for covering at least one of the recesses when the door is in a position blocking access to the door opening.

Such a vehicle is for example known from EP2964488B1. In this known vehicle the number of steps are positioned behind the front wheels of the vehicle, when seen in the vehicle's normal direction of movement. The lower door extension extends outboard to match the outboard extension of a fender located immediately to the rear of the front wheel to provide a coplanar transition from the fender to the door. In order to minimize aerodynamic drag the turbulence caused by friction of air flowing around the sides of the vehicle in particular at the transition between the fender and the chassis fairing, in the known vehicle a gap is created between a lowermost edge of an exterior cab side panel on the cabin and a fairing on the chassis, wherein the gap extends along the side of the cabin and chassis fairing at least from the rear of the lower door extension to an end of the cabin, which the gap is angled greater than 0 degrees with respect to a horizontal direction. The angled configuration restricts the air from flowing into the gap and, therefore, directs more air around the vehicle to avoid the air hitting the front of the trailer, thereby improving the aerodynamic properties of the vehicle and thus providing a reduction in fuel consumption. Thus such a gap between the lowermost edge of the exterior cab side panel on the cabin and the fairing on the chassis reduces aerodynamic drag in vehicles in which the steps leading to the door opening are provided behind the front wheel. Please note that such vehicles usually have a cabin of relatively large longitudinal length. However, in vehicles, in particular heavy goods vehicles, in which the number of steps are positioned in front of the front wheels and wherein in addition the cabin usually is of relatively small longitudinal length, the available space (in particular the length) is insufficient to provide such a gap to reduce the aerodynamic drag. Another prior art document is KR 2017 0135436 A, which discloses a vehicle according to the preamble of claim 1.

There is thus a need in the field to reduce the aerodynamic drag in a vehicle, in particular a heavy goods vehicle, in which the number of steps is positioned in front of the front wheels when seen in the vehicle's normal direction of movement.

According to the invention this object can be obtained by providing a vehicle, in particular a heavy goods vehicle, having a chassis, a cabin supported by the chassis, the cabin comprising a cabin front surface facing forwards in the vehicle's normal direction of movement, a cabin front corner section on a side of the cabin front surface, and a cabin side section which extends from the cabin front corner section rearwards in the vehicle's normal direction of movement, the chassis comprising a chassis front surface facing forwards in the vehicle's normal direction of movement, a chassis front corner section on a side of the chassis front surface, a chassis side section which extends from the chassis front corner section rearwards in the vehicle's normal direction of movement and a chassis corner transition region between the chassis front surface and the chassis side section, the cabin side section being provided with a door and a door opening, the door being hingeably mounted to the cabin around a door hinge for blocking access or allowing access to the door opening, the door opening having a lower door opening edge, the vehicle comprising a number of steps leading to the door opening, each of the steps being supported by the cabin or the chassis, wherein an upper step of the number of steps is positioned at a distance below the lower door opening edge, wherein the steps are placed within one or more recesses in the cabin or the chassis and wherein the door comprises a lower door extension extending downwardly for covering at least one of the recesses when the door is in a position blocking access to the door opening, characterized in that the vehicle comprises a door extension seal mounted to the chassis corner transition region, the door extension seal extending from the chassis corner transition region outwards towards the lower door extension and engaging the lower door extension in a forward portion thereof, the door extension seal having an upper edge positioned in a vertical direction above the lower door opening edge and a lower edge positioned in vertical direction below the upper step. The invention is based on the insight that the door extension seal blocks a gap between the lower door extension and the chassis corner transition region and thus blocks air flow coming out of the recess between the upper step and the lower door opening edge, which air flow otherwise would disturb the clean flow region which surrounds the vehicle. In addition, by closing this gap the door extension seal also helps to prevent the air flow from separating in the corner region of the cabin and chassis, thereby reducing aerodynamic drag and thus improving fuel economy. The invention is further based on the insight that the door extension seal can also reduce aerodynamic drag when applied to vehicles in which the number of steps are positioned behind the front wheels.

In an embodiment of a vehicle according to the invention in which the number of steps comprises a lower step and wherein the lower edge of the door extension seal is positioned in vertical direction at or below the lower step, the door extension seal blocks air flow coming out of all the recesses between the steps as well as the recess between the upper step and the lower door opening edge, thereby further reducing aerodynamic drag. It is observed here that arranging the door extension seal such that it engages the lower door extension in a forward portion, or leading portion, thereof is sufficient in reducing aerodynamic drag and that it is not necessary to provide a seal engaging the complete circumference of the lower door extension in order to reduce aerodynamic drag.

In another embodiment of a vehicle according to the invention the door extension seal comprises a rigid section and an elastic section, the rigid section being in engagement with the chassis corner transition region and the elastic section engaging the lower door extension. By means of the rigid section the door extension seal can be mounted in a constructional robust manner to the chassis corner transition region while by means of the elastic section a closed engagement with the lower door extension can be maintained during driving of the vehicle and, in case the cabin is supported by the chassis to allow movements between the cabin and the chassis, when the cabin is moving with regard to the chassis. The elastic section thus ensures engagement of the door extension seal to the lower door extension in particular by making use of a lower pressure on the outside of the door extension seal which forces the door extension seal against the lower door extension.

In a further embodiment of a vehicle according to the invention the door extension seal comprises horizontal ribs on a surface of the door extension seal facing the chassis side section. By using such horizontal ribs a pre-tension is built into the door extension seal when the door is closed, which ensures that the door extension seal maintains its position and shape.

In a still further embodiment of a vehicle according to the invention the chassis corner transition region comprises a slit for receiving a side edge of the door extension seal. In this manner the door extension seal can be mounted to the chassis corner transition region in a mechanical robust manner. Preferably, the door extension seal then comprises a door extension seal flange engaging a portion of the chassis corner transition region adjacent the slit opposite the front surface of the chassis. In particular when the vehicle comprises a tiltable cabin, the flange prevents misallocation and damage of the door extension seal when the cabin is tilted backwards from an open position to a closed driving position.

The invention is in particular advantageous with vehicle in which the number of steps is positioned in front of the front wheels when seen in the vehicle's normal direction of movement.

The invention will be further explained with reference to the Figures, in which a non-limiting exemplary embodiment of according to the invention is shown:
Fig. 1 schematically shows a part of a vehicle having a door with a lower door extension covering a recess when the door is in a position blocking access to the door opening without a door extension seal;
Fig. 2 schematically shows the part of the vehicle as shown in Figure 1 in which the door with lower door extension is left out for showing the steps and recesses;
Fig. 3 schematically shows a part of a vehicle as shown in Figure 1 with the door extension seal according to an embodiment of the invention;
Fig. 4 schematically shows the part of the vehicle as shown in Figure 3 in which the door with lower door extension is left out for showing the steps and recesses and door extension seal;
Figs. 5 and 6 schematically show the part of the vehicle as shown in Figure 3 from above and in perspective more clearly indicating the door extension seal; and
Figs. 7 and 8 schematically show the effect of the door extension seal on the air flow in the corner region of the vehicle.

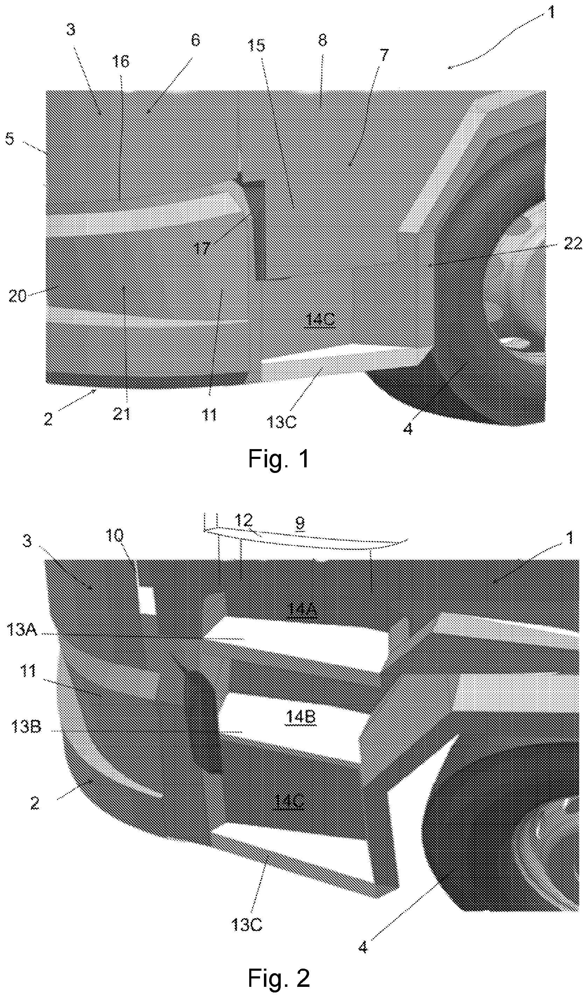

In Fig. 1 a part of a vehicle 1, in particular a heavy goods vehicle, is schematically shown in a perspective view. The vehicle 1 has a chassis 2 and a cabin 3 supported by the chassis 2. The vehicle 1 is supported by wheels of which one of the front wheels 4 is visible in Figures 1 and 2. The cabin 3 comprising a cabin front surface 5 facing forwards in the normal direction of movement of the vehicle 1. On each side of the cabin front surface 5 a cabin front corner section is provided and one cabin front corner section 6 is visible in Figure 1. A cabin side section 7 extends from the cabin front corner section 6 rearwards in the normal direction of movement of the vehicle 1. The cabin side section 7 is provided with a door 8 and a door opening 9 (Fig. 2). The chassis 2 comprising a chassis front surface 20 facing forwards in the normal direction of movement of the vehicle 1. On each side of the chassis front surface 20 a chassis front corner section is provided and one chassis front corner section 21 is visible in Figure 1. A chassis side section 22 extends from the chassis front corner section 21 rearwards in the normal direction of movement of the vehicle 1 and a chassis corner transition region 11 is present between the chassis front surface 20 and the chassis side section 22.

The door 8 is hingeably mounted to the cabin 3 around a door hinge for blocking access (schematically shown by reference numeral 10 in Fig. 2) or allowing access (Fig. 2; please note that in Fig. 2 the door has been left out for ease of drawing) into the door opening 9. The door opening 9 has a lower door opening edge 12 which is clearly visible in Fig. 2.

The vehicle 1 comprises a number of steps 13A-13C leading to the door opening 9, each of the steps 13A-13C being either supported by the cabin 3 or by the chassis 2. An upper step 13A of the number of steps is positioned at a distance below the lower door opening edge 12 so that the upper step 13A is placed in a recess 14A in the cabin 3. The other steps 13B, 13C are placed in a recess 14B, 14C, respectively, in the chassis 2.

The door 8 comprises a lower door extension 15 extending downwardly for covering the recesses 14A and 14B when the door 8 is in the position blocking access to the door opening 9. As seen in Fig. 1 there is a gap 16 between the chassis 2 and the cabin 3 for allowing movement of the cabin 3 with regard to the chassis 2, and a gap 17 between the leading edge of the door 8 and the chassis corner transition region 11.

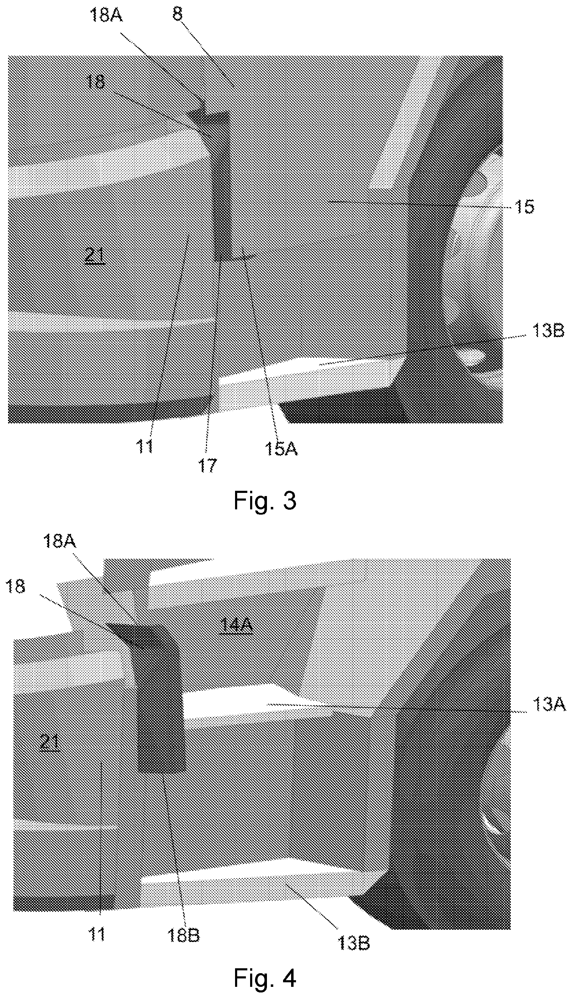

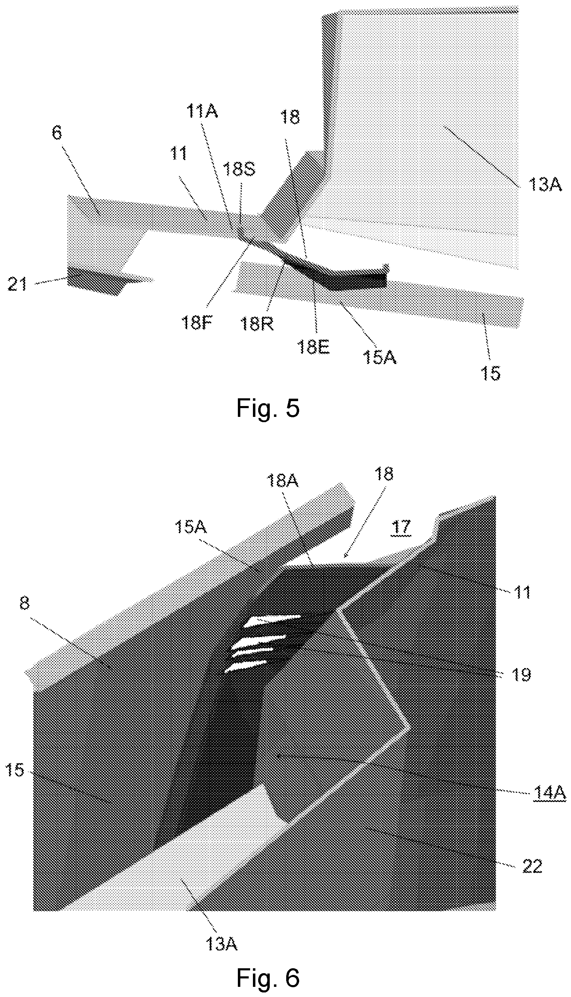

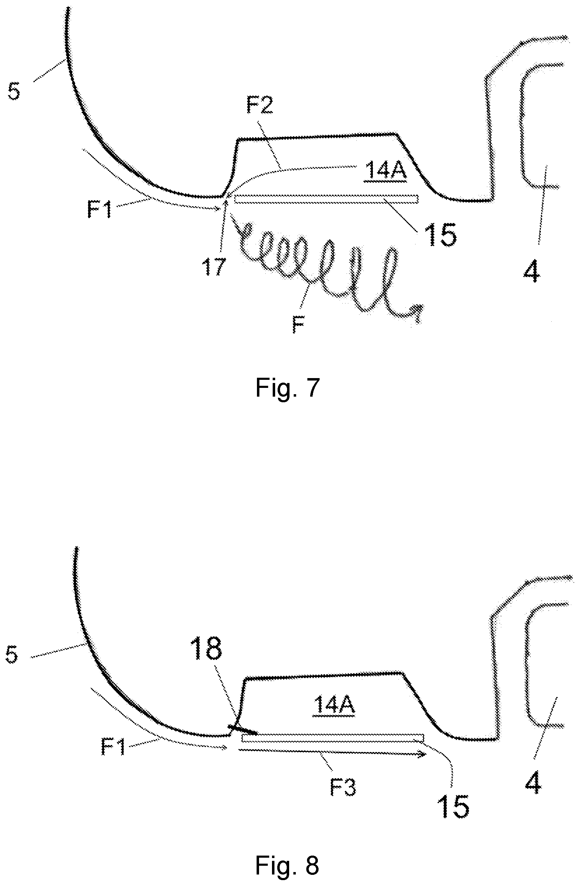

The invention will be explained with reference to Figures 3 to 6. Below the differences between the vehicle 1 according to the invention and the vehicle 1 as shown in Figures 1 and 2 will be explained in further detail. According to the invention the vehicle 1 comprises a door extension seal 18 (see Figures 3 to 6) mounted to the chassis corner transition region 11, which door extension seal 18 extends from the chassis corner transition region 11 outwards towards the lower door extension 15. In Figure 3 the situation is shown in which the door 8 is in the closed position. In Figure 4 the situation is shown in which the door 8 is in the open position, but in order to show the other parts of the vehicle 1 more clearly the door has been left out. In Figure 5 a top view is shown more clearly indicating the arrangement of the door extension seal 18 and in Figure 6 a top perspective cut out view is shown as seen from inside of the vehicle 1. The door extension seal 18 is arranged to engage the lower door extension 15 in a forward portion 15A thereof, also called a leading portion 15A of the lower door extension 15, during driving of the vehicle 1 and when the cabin 3 is moving with regard to the chassis 2. The door extension seal 18 has an upper edge 18A preferably positioned in a vertical direction above the lower door opening edge 12 and a lower edge 18B positioned in vertical direction below the upper step 13A. The door extension seal 18 thus at least substantially closes or blocks the gap 17 between the door 8 and the chassis corner transition region 11, thereby blocking air flow F2 coming out of the recess 14A between the upper step 13A and the lower door opening edge 12, which air flow F2 otherwise would disturb the clean flow F1 which normally is attached to the corner region of the vehicle 1 (see also Figures 7 and 8). In addition, by closing this gap 17 the door extension seal 18 also helps to prevent the air flow F1, F3 from separating in the corner region of the cabin 3 and the chassis side section 22, as shown in Figure 8, thereby reducing aerodynamic drag and thus improving fuel economy. In Figure 7 a situation is shown in which a door extension seal is absent. It can be seen that in the situation of Figure 7 air flow F2 coming out of the recess 14A between the upper step 13A and the lower door opening edge 12 disturbs the air flow F1 which as a result of the disturbance separates as a flow F from the corner region of the vehicle.

In the embodiment shown in Figures 3 and 4 the lower door extension 15 and thus the door extension seal 18 are dimensioned such that only the upper recess 14A is covered by the lower door extension 15 and air flow coming out of the recess 14A is blocked. It will be clear that in other not shown embodiments the lower door extension 15 can be dimensioned to cover more recesses and the door extension seal 18 can in conformity be dimensioned to block air coming out of these recesses via the gap 17. In particular, the lower edge 18B of the door extension seal 18 and the lower door extension are positioned in vertical direction at or below the lower step 13C so that all recesses are covered.

In the embodiment shown in Figures 3 and 4 the number of steps 13A-13C is positioned in front of the front wheels 4 when seen in normal direction of movement of the vehicle 1. It is observed here that the invention can also beneficially be used in vehicles in which the number of steps are positioned behind the front wheels.

In Figure 5 it is shown that the chassis corner transition region 11 comprises a slit 11A for receiving a side edge 18S of the door extension seal 18, so that the door extension seal 18 can be mounted in a mechanical reliable manner to the chassis corner transition region 11. In the embodiment shown the door extension seal 18 comprises a rigid section 18R and an elastic section 18E. The rigid section 18R is in engagement with the chassis corner transition region 11 and the elastic section 18E engages the lower door extension 15. The door extension seal 18 comprises a door extension seal flange 18F engaging a portion of the chassis corner transition region 11 adjacent the slit 11A opposite the chassis front surface 5 of the chassis 3. The door extension seal 18 further comprises horizontal ribs 19 on a surface of the door extension seal 18 facing the chassis side section 22.

## Claims

1. A vehicle (1), in particular a heavy goods vehicle, having a chassis (2), a cabin (3) supported by the chassis (2), the cabin (3) comprising a cabin front surface (5) facing forwards in the vehicle's normal direction of movement, a cabin front corner section (6) on a side of the cabin front surface (5), and a cabin side section (7) which extends from the cabin front corner section (6) rearwards in the vehicle's normal direction of movement, the chassis (2) comprising a chassis front surface (20) facing forwards in the vehicle's normal direction of movement, a chassis front corner section (21) on a side of the chassis front surface (20), a chassis side section (22) which extends from the chassis front corner section (21) rearwards in the vehicle's normal direction of movement and a chassis corner transition region (11) between the chassis front surface (20) and the chassis side section (22), the cabin side section (7) being provided with a door (8) and a door opening (9), the door (8) being hingeably mounted to the cabin (3) around a door hinge (10) for blocking access or allowing access to the door opening (9), the door opening (9) having a lower door opening edge (12), the vehicle (1) comprising a number of steps (13A-13C) leading to the door opening (9), each of the steps (13A-13C) being supported by the cabin (3) or the chassis (2), wherein an upper step (13A) of the number of steps (13A-13C) is positioned at a distance below the lower door opening edge (12), wherein the steps (13A-13C) are placed within one or more recesses (14A, 14B) in the cabin (3) or the chassis (2) and wherein the door (8) comprises a lower door extension (15) extending downwardly for covering at least one of the recesses (14A, 14B) when the door (8) is in a position blocking access to the door opening (9), **characterized in that** the vehicle (1) comprises a door extension seal (18) mounted to the chassis corner transition region (11), the door extension seal (18) extending from the chassis corner transition region (11) outwards towards the lower door extension (15) and engaging the lower door extension (15) in a forward portion thereof, the door extension seal (18) having an upper edge (18A) positioned in a vertical direction above the lower door opening edge (12) and a lower edge (18B) positioned in vertical direction below the upper step (13A).

2. A vehicle (1) according to claim 1, wherein the number of steps (13A-13C) comprises a lower step (13C) and wherein the lower edge (18B) of the door extension seal (18) is positioned in vertical direction at or below the lower step (13C).

3. A vehicle (1) according to claim 1 or 2, wherein the door extension seal (18) comprises a rigid section (18R) and an elastic section (18E), the rigid section (18R) being in engagement with the chassis corner transition region (11) and the elastic section (18E) engaging the lower door extension (15).

4. A vehicle (1) according to claim 1, 2 or 3, wherein the door extension seal (18) comprises horizontal ribs (19) on a surface of the door extension seal (18) facing the chassis side section (22).

5. A vehicle (1) according to any one of the preceding claims, wherein the chassis corner transition region (11) comprises a slit (11A) for receiving a side edge (18S) of the door extension seal (18).

6. A vehicle (1) according to claim 5, wherein the door extension seal (18) comprises a door extension seal flange (18F) engaging a portion of the chassis corner transition region (11) adjacent the slit (11A) opposite the front surface (20) of the chassis (2).

7. A vehicle (1) according to any one of the preceding claims, wherein the vehicle (1) comprises front wheels (4), and wherein the number of steps (13A-13C) is positioned in front of the front wheels (4) when seen in the vehicle's normal direction of movement.

## Patentansprüche

1. Fahrzeug (1), insbesondere ein Schwerlastkraftwagen, der ein Chassis (2), eine Kabine (3), die von dem Chassis (2) getragen wird, umfasst, wobei die Kabine (3) eine Kabinenvorderoberfläche (5) umfasst, die in die normale Bewegungsrichtung des Fahrzeugs nach vorn gewandt ist, einen Kabinenvorderecken-Teilabschnitt (6) an einer Seite der Kabinenvorderoberfläche (5) und einen Kabinenseiten-Teilabschnitt (7), der sich von dem Kabinenvorderecken-Teilabschnitt (6) rückwärts in die normale Bewegungsrichtung des Fahrzeugs erstreckt, wobei das Chassis (2) eine Chassisvorderseitenoberfläche (20) umfasst, die in die normale Bewegungsrichtung des Fahrzeugs nach vorn gewandt ist, einen Chassisvorderseitenecken-Teilabschnitt (21) an einer Seite der Chassisvorderseitenoberfläche (20), einen Chassisseiten-Teilabschnitt (22), der sich von dem Chassisvorderseitenecken-Teilabschnitt (21) rückwärts in die normale Bewegungsrichtung des Fahrzeugs erstreckt, und einen Chassiseckenübergangsbereich (11) zwischen der Chassisvorderseitenoberfläche (20) und dem Chassisseiten-Teilabschnitt (22), wobei der Kabinenseiten-Teilabschnitt (7) mit einer Tür (8) und einer Türöffnung (9) versehen ist, wobei die Tür (8) an der Kabine (3) um ein Türscharnier (10) drehbar angelenkt ist, um Zugang zu der Türöffnung (9) zu blockieren oder zu gestatten, wobei die Türöffnung (9) eine untere Türöffnungskante (12) aufweist, das Fahrzeug (1) eine Anzahl von Stufen (13A-13C) umfasst, die zu der Türöffnung (9) führen, wobei jede der Stufen (13A-13C) von der Kabine (3) oder dem Chassis (2) getragen wird, wobei eine obere Stufe (13A) der Anzahl von Stufen (13A-13C) in einem Abstand unter der unteren Türöffnungskante (12) positioniert ist, wobei die Stufen (13A-13C) innerhalb einer oder mehrerer Vertiefungen (14A, 14B) in der Kabine (3) oder dem Chassis (2) platziert sind, und wobei die Tür (8) eine untere Türerweiterung (15) umfasst, die sich zum Abdecken mindestens einer der Vertiefungen (14A, 14B) nach unten erstreckt, wenn sich die Tür (8) in einer Position, die Zugang zu der Türöffnung (9) blockiert, befindet, **dadurch gekennzeichnet, dass** das Fahrzeug (1) eine Türerweiterungsabdichtung (18) umfasst, die an den Chassiseckenübergangsbereich (11) montiert ist, sich die Türerweiterungsdichtung (18) von dem Chassiseckenübergangsbereich (11) nach außen in Richtung der unteren Türerweiterung (15) erstreckt und in die untere Türerweiterung (15) in einem Vorderabschnitt davon eingreift, wobei die Türerweiterungsdichtung (18) eine obere Kante (18A) aufweist, die in einer vertikalen Richtung oberhalb der unteren Türöffnungskante (12) positioniert ist, und eine untere Kante (18B), die in vertikaler Richtung unter der oberen Stufe (13A) positioniert ist.

2. Fahrzeug (1) nach Anspruch 1, wobei die Anzahl von Stufen (13A-13C) eine untere Stufe (13C) umfasst, und wobei die untere Kante (18B) der Türerweiterungsdichtung (18) in vertikaler Richtung an oder unter der unteren Stufe (13C) positioniert ist.

3. Fahrzeug (1) nach Anspruch 1 oder 2, wobei die Türerweiterungsdichtung (18) einen starren Teilabschnitt (18R) und einen elastischen Teilabschnitt (18E) umfasst, wobei sich der starre Teilabschnitt (18R) im Eingriff mit dem Chassiseckenübergangsbereich (11) befindet, und sich der elastische Teilabschnitt 18E) im Eingriff mit der unteren Tür Erweiterung (15) befindet.

4. Fahrzeug (1) nach Anspruch 1, 2 oder 3, wobei die Türerweiterungsdichtung (18) horizontale Rippen (19) auf einer Oberfläche der Türerweiterungsdichtung (18), die dem Chassisseiten-Teilabschnitt (22) zugewandt ist, umfasst.

5. Fahrzeug (1) nach einem der vorstehenden Ansprüche, wobei der Chassiseckenübergangsbereich (11) einen Schlitz (11A) zum Aufnehmen einer Seitenkante (18S) der Türerweiterungsdichtung (18) umfasst.

6. Fahrzeug (1) nach Anspruch 5, wobei die Türerweiterungsdichtung (18) einen Türerweiterungsdichtungsflansch (18F) umfasst, der in einen Abschnitt des Chassiseckenübergangsbereich (11) an den Schlitz (11A) der Vorderseitenoberfläche (20) des Chassis (2) entgegengesetzt, eingreift.

7. Fahrzeug (1) nach einem der vorstehenden Ansprüche, wobei das Fahrzeug (1) Vorderräder (4) umfasst, und wobei die Anzahl von Stufen (13A-13C) in der normalen Bewegungsrichtung des Fahrzeugs betrachtet vor den Vorderrädern (4) positioniert ist.

## Revendications

1. Véhicule (1), en particulier véhicule poids lourd, présentant un châssis (2), une cabine (3) supportée par le châssis (2), la cabine (3) comprenant une surface avant de cabine (5) orientée vers l'avant dans la direction de déplacement normale du véhicule, une section de coin avant de cabine (6) sur un côté de la surface avant de cabine (5) et une section latérale de cabine (7) qui s'étend de la section de coin avant de cabine (6) vers l'arrière dans la direction de déplacement normale du véhicule, le châssis (2) comprenant une surface avant de châssis (20) orientée vers l'avant dans la direction de déplacement normale du véhicule, une section de coin avant de châssis (21) sur un côté de la surface avant de châssis (20), une section latérale de châssis (22) qui s'étend de la section de coin avant de châssis (21) vers l'arrière dans la direction de déplacement normale du véhicule et une région de transition de coin de châssis (11) entre la surface avant de châssis (20) et la section latérale de châssis (22), la section latérale de cabine (7) étant pourvue d'une porte (8) et d'une ouverture de porte (9), la porte (8) étant montée de manière articulée sur la cabine (3) autour d'une charnière de porte (10) pour bloquer un accès ou permettre un accès à l'ouverture de porte (9), l'ouverture de porte (9) présentant un bord d'ouverture de porte inférieur (12), le véhicule (1) comprenant un certain nombre de marches (13A-13C) menant à l'ouverture de porte (9), chacune des marches (13A-13C) étant supportée par la cabine (3) ou le châssis (2), dans lequel une marche supérieure (13A) du certain nombre de marches (13A-13C) est positionnée à une distance inférieure au bord inférieur d'ouverture de porte (12), dans lequel les marches (13A-13C) sont placées à l'intérieur d'un ou plusieurs évidements (14A, 14B) dans la cabine (3) ou le châssis (2) et dans lequel la porte (8) comprend une extension de porte inférieure (15) s'étendant vers le bas pour couvrir au moins un des évidements (14A, 14B) lorsque la porte (8) est dans une position bloquant un accès à l'ouverture de porte (9), **caractérisé en ce que** le véhicule (1) comprend un joint d'extension de porte (18) monté sur la région de transition de coin de châssis (11), le joint d'extension de porte (18) s'étendant de la région de transition de coin de châssis (11) vers l'extérieur en direction de l'extension de porte inférieure (15) et venant en prise avec l'extension de porte inférieure (15) dans une partie avant de celle-ci, le joint d'extension de porte (18) présentant un bord supérieur (18A) positionné dans une direction verticale au-dessus du bord d'ouverture de porte inférieur (12) et un bord inférieur (18B) positionné dans une direction verticale en dessous de la marche supérieure (13A).

2. Véhicule (1) selon la revendication 1, dans lequel le certain nombre de marches (13A-13C) comprend une marche inférieure (13C) et dans lequel le bord inférieur (18B) du joint d'extension de porte (18) est positionné dans la direction verticale au niveau ou en dessous de la marche inférieure (13C).

3. Véhicule (1) selon la revendication 1 ou 2, dans lequel le joint d'extension de porte (18) comprend une section rigide (18R) et une section élastique (18E), la section rigide (18R) étant en prise avec la région de transition de coin de châssis (11) et la section élastique (18E) venant en prise avec l'extension de porte inférieure (15).

4. Véhicule (1) selon la revendication 1, 2 ou 3, dans lequel le joint d'extension de porte (18) comprend des nervures horizontales (19) sur une surface du joint d'extension de porte (18) orienté vers la section latérale de châssis (22).

5. Véhicule (1) selon l'une quelconque des revendications précédentes, dans lequel la région de transition de coin de châssis (11) comprend une fente (11A) pour recevoir un bord latéral (18S) du joint d'extension de porte (18).

6. Véhicule (1) selon la revendication 5, dans lequel le joint d'extension de porte (18) comprend une bride de joint d'extension de porte (18F) venant en prise avec une partie de la région de transition de coin de châssis (11) adjacente à la fente (11A) opposée à la surface avant (20) du châssis (2).

7. Véhicule (1) selon l'une quelconque des revendications précédentes, dans lequel le véhicule (1) comprend des roues avant (4), et dans lequel le certain nombre de marches (13A-13C) sont positionnés en avant des roues avant (4) en regardant dans la direction de déplacement normale du véhicule.
